# EUROPEAN PATENT APPLICATION

(11) **EP 1 336 334 A1**
(43) Date of publication of application: **20.08.2003**
(21) Application number: 02003189.4
(22) Date of filing: 18.02.2002
(51) Int. Cl.: A01F 15/14

(54) **Quick tying unit for a press for gathering rolled bales**

(71) Applicant: Gallignani S.p.A., 48026 Russi (Ravenna) (IT)
(72) Inventor: Ravaglia, Paolo, 48012 Glorie di Bagnacavallo, (Ravenna) (IT)
(74) Representative: Modiano, Guido, Dr.-Ing.

(57) **Abstract**

A quick tying unit (1) for a gathering press for rolled bales, comprising, proximate to the bale forming chamber, two parallel guides (2,3) for two carriages (6,7), each of which supports a pair of twine guides (16a,16b,17a,17b) which are adapted to wind on the bale four twines simultaneously; the carriages are connected to motorization means (11) suitable to move them symmetrically in mutually opposite directions along the guides from respective intermediate positions to the mid-bale dimension, up to the free end of the bale and then toward the center of the bale, where the twines mutually overlap, and two lateral cutters are provided which are mounted so as to be fixed on the guides and against each of which the two twines carried by a pair of twine guides are moved for cutting at the end of the tying process.

## Description

The present invention relates to a quick tying unit for a press for gathering rolled bales.

Gathering presses are known which form rolled bales of hay, straw, grass or the like in a compression chamber that can rotate about a substantially horizontal axis; in order to stabilize the bale, it is known to wrap it with multiple turns of cord or twine.

Tying units have been devised for tying the bale which insert one end of the twine between the bale and the bale turning elements and, when the twine is engaged and drawn so as to wind around the bale, move the twine laterally from one part of the bale to the other, so as to provide multiple helical windings.

Single-twine tying units of this type require times on the order of 40-60 seconds to perform tying.

In order to speed up the tying operations, it has been thought to use a double tying unit, i.e., a machine that dispenses simultaneously two twines which are slightly spaced from each other and are actuated simultaneously back and forth along the bale: in this manner, the pitch of the turns can be doubled and therefore both the number of rotations of the bale and the wrapping time can be reduced considerably (from 25 to 45 seconds).

Some recently manufactured tying units provide for the presence of two single-twine tying units, each of which ties slightly more than half the bale; these tying units provide results that are qualitatively better than those of the double twine with a tying speed that is a few seconds higher.

The aim of the present invention is to provide a quick tying unit for a gathering press for rolled bales that is capable of performing tying in a very short time.

Within this aim, an object of the present invention is to provide a structure that is simple, relatively easy to provide in practice, safe in use, effective in operation and at relatively low cost.

This aim and this and other objects which will become better apparent hereinafter, are achieved by the present quick tying unit for a gathering press for rolled bales, characterized in that proximate to the bale forming chamber it comprises at least two guiding means, each of which supports a pair of twine guides which are adapted to wind on the bale at least four twines simultaneously, motorization means which are connected to said guiding means and are adapted to move them along respective bale parts, at least two fixed lateral cutters against each of which the two twines guided by a pair of twine guides are moved for cutting at the end of the tying process.

Further characteristics and advantages of the invention will become better apparent from the following detailed description of a preferred but not exclusive embodiment of a quick tying unit for gathering press for rolled bales, illustrated only by way of non-limitative example in the accompanying drawings, wherein:

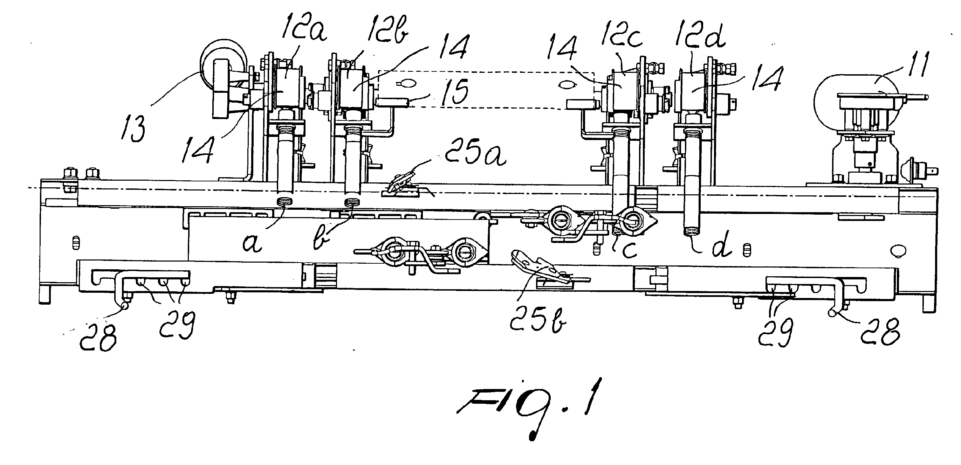

Figure 1 is a front view of a quick tying unit for gathering press for rolled bales according to the present invention;

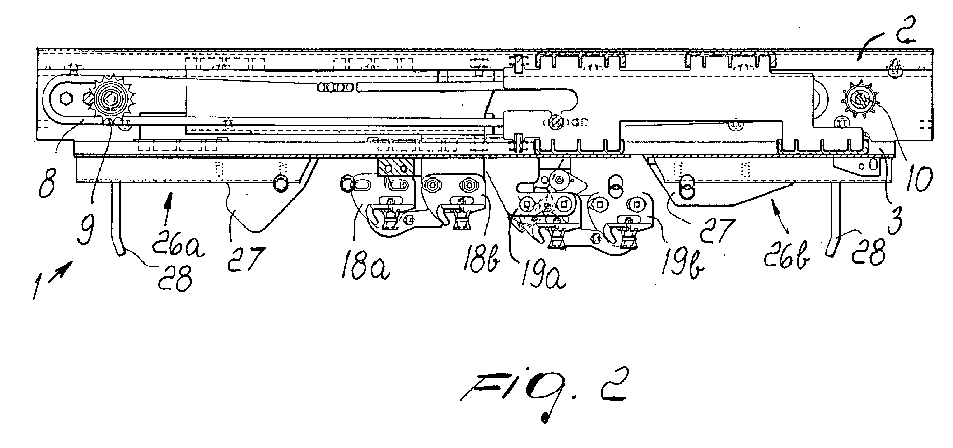

Figure 2 is a top view of the tying unit;
Figure 3 is a side view of the tying unit of Figure 1;

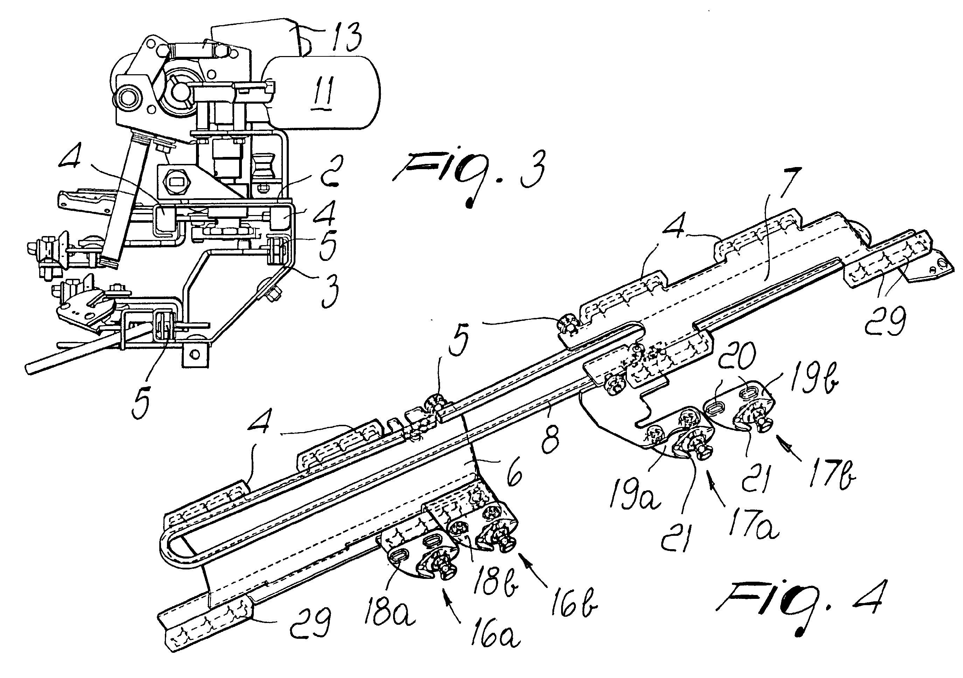

Figure 4 is a perspective view of characteristic functional elements of the tying unit;

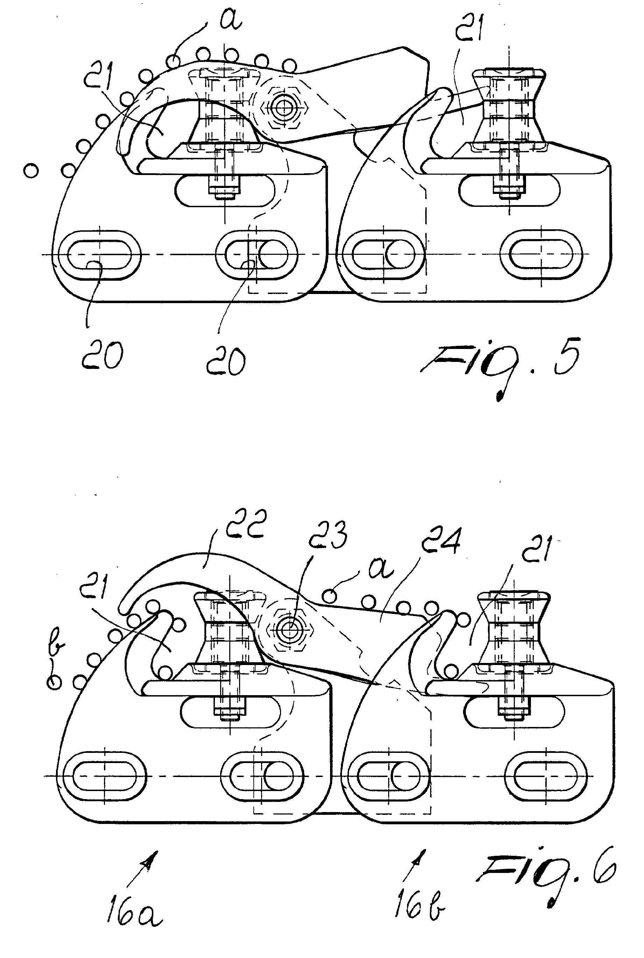

Figures 5 and 6 are top views of a pair of twine guides of the tying unit in two successive operating configurations.

With reference to the figures, the reference numeral 1 generally designates a quick tying unit for gathering press for rolled bales according to the invention, which is mounted proximate to the bale forming chamber.

The tying unit 1 comprises guiding means, which are constituted, in the particular case shown in the figures, by two parallel guides 2 and 3, which are arranged side by side and along which two carriages 6 and 7 are mounted so that they can slide horizontally by means of sliding blocks or free rollers 4 and 5.

The carriages 6 and 7 are rigidly coupled in symmetrically mutually opposite positions to a chain 8 which is closed in a loop and is wound around two sprockets 9 and 10, which are mounted so that they can rotate about vertical axes at the opposite ends of the guides 2 and 3, the parallel portions of the chain being co-planar.

The sprocket 10 is connected to motorization means which are constituted by a second motor 11 for actuating along the guides the two carriages 6 and 7; the motor is designed to move them symmetrically in mutually opposite directions along the guides from respective intermediate positions to the mid-bale dimension, up to the free end of the bale, and then toward the center of the bale, where the twines overlap each other.

Two pairs of assemblies 12a, 12b, 12c, 12d for dispensing four tying twines or cords are mounted in positions that are substantially central to the two half-parts of the guides; the reference numeral 13 designates a first motor for actuating four wheels 14 for drawing the four twines from respective dispensing spools; said wheels are controlled by respective sensors 15 for detecting the speed of the twine, in practice the fact that each one of the four twines is pulled by the bale.

Each one of the carriages 6 and 7 supports two twine guides 16a, 16b, 17a, 17b which wind onto the bale simultaneously the four twines a, b, c, d dispensed by the assemblies 12.

Each one of the pairs of twine guides comprises two plates 18a, 18b, 19a, 19b, each of which is provided with two slots 20 for fixing them in an adjustable position in corresponding slots of the carriages 6 and 7; seats 21 are provided in each one of the plates 18 and 19 and two twines are successively accommodated in said seats.

The seats 21 are hook-shaped and are arranged one after the other: the reference numeral 22 designates a lever, which is articulated so as to oscillate by means of a pivot 23 whose axis is located between the openings of the hooks 21 of a pair of hooks and is returned by elastic means, not shown in the figures, into the configuration for blocking the inlet of the first hook (designated by the reference numerals 16a and 17b).

The lever 22 is rigidly coupled to a pawl 24, which extends over the inlet of the second hook (16b, 17a): when the tensioned twine passes in front of the first hook that it encounters in its motion, it moves beyond it, passing over the lever 22, and enters the second hook that it encounters, where it opens the pawl 24 so that the lever 22 moves from the configuration for closing the inlet of the first hook, allowing the second twine to enter the hook 16a or 17b.

Therefore, the twines a, b, c, d are dispensed by the assemblies 12a, 12b, 12c, 12d, which are engaged respectively by the twine guides 16a, 16b, 17a, 17b.

The reference numerals 25a, 25b designate two lateral cutters, which are mounted in a fixed position on the guides; the two twines carried by a pair of twine guides are moved against each one of the cutters for cutting at the end of the tying operation: in particular, the pair of twine guides 17 carries the twines to the cutter 25b, while the pair of twine guides 16 carries the twines to the cutter 25a.

Two stroke limiters 26a, 26b are mounted at the two ends of the front of the guides 2 and 3; each stroke limiter has a wing 27 with inclined lateral profiles and a pin 28 which can be positioned adjustably in series of notches 29: the pins 28 prevent the twines from escaping at the two sides beyond of the dimensions of the bale both during winding and when the bale is finished.

The operation of the invention is as follows: the motor 13 is actuated and the assemblies for dispensing the four twines begin to dispense the twines: when the twines are engaged by the bale, their speed increases, and the unwinding of the twines determined by the motor 13 is slower than the speed of their winding on the bale: respective freewheel devices, placed on each dispensing unit, are activated and each individual twine unwinds freely from the respective reel to the bale.

When all four twines a, b, c, d are tensioned between their respective spools and the bale, the motor 13 is switched off and the motor 11 is activated, moving the two carriages toward the respective end of the nearest bale: each one of the four twine guides of the pairs of twine guides captures its own twine, as shown above, and each pair of twines is moved first toward and then away from the end of the bale.

When the twine guides arrive at the centerline of the bale, the twines overlap each other and each pair of twine guides carries the pair of twines to the respective cutter 25, which cuts the twine.

It is noted that the bale is wound simultaneously with four twines which move in pairs, each pair at one half of the bale; this allows to have a double spacing of the winding of each twine, halving the time required for winding around the bale, and to have a front equal to slightly more than half a bale to be wound, and this also almost halves again the tying time.

It has thus been shown that the invention achieves the intended aim and objects.

The invention thus conceived is susceptible of numerous modifications and variations, all of which are within the scope of the appended claims; thus, for example, the guiding means can be different from the ones illustrated in detail.

All the details may further be replaced with other technically equivalent ones.

In practice, the materials used, as well as the shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A quick tying unit for a gathering press for rolled bales, **characterized in that** proximate to the bale forming chamber it comprises at least two guiding means, each of which supports a pair of twine guides which are adapted to wind on the bale at least four twines simultaneously, motorization means which are connected to said guiding means and are adapted to move them along respective bale parts, at least two fixed lateral cutters against each of which the two twines guided by a pair of twine guides are moved for cutting at the end of the tying process.

2. The quick tying unit for a gathering press for rolled bales according to claim 1, **characterized in that** said guiding means are constituted by two parallel guides which are orientated parallel to the axis of the bale and along which respective carriages are mounted so that they can slide longitudinally, each carriage supporting a pair of twine guides.

3. The tying unit according to one or more of the preceding claims, **characterized in that** said carriages are two in number and said motorization means are adapted to move them symmetrically in mutually opposite directions along the guides from respective intermediate positions to the mid-bale dimension up to the free end of the bale and then toward the center of the bale, where the twines mutually overlap.

4. The tying unit according to one or more of the preceding claims, **characterized in that** it comprises a first motor for actuating four spools for delivering the four twines which are controlled by respective sensors for detecting the speed of the corresponding twine drawn by the bale.

5. The tying unit according to one or more of the preceding claims, **characterized in that** said guides are arranged side by side and **in that** said carriages are rigidly coupled in symmetrically mutually opposite positions to a chain which is closed in a loop and winds around two sprockets which are mounted so as to be able to rotate at the mutually opposite ends of said guides, one of said sprockets being connected to a second motor for actuation along the guides.

6. The tying unit according to one or more of the preceding claims, **characterized in that** said sprockets have vertical axes and **in that** the two portions of said chain are co-planar.

7. The tying unit according to one or more of the preceding claims, **characterized in that** each one of said pair of twine guides comprises two seats in which two twines are accommodated successively, said seats being hook-shaped and being arranged one after the other, and an articulated lever, which oscillates about an axis located between the openings of the hooks and is returned by elastic means into the configuration for blocking the inlet of the first hook.

8. The tying unit according to one or more of the preceding claims, **characterized in that** said lever is rigidly coupled to a pawl which protrudes onto the inlet of the second hook, the tensioned twine entering the second hook and being suitable to open said pawl so that said lever moves from the configuration for blocking the inlet of the first hook.
